# EUROPÄISCHE PATENTSCHRIFT

(11) **EP 3 957 149 B1**
(45) Veröffentlichungstag und Bekanntmachung des Hinweises auf die Patenterteilung: **12.08.2026**
(21) Anmeldenummer: 21181130.2
(22) Anmeldetag: 23.06.2021
(51) Int. Cl.: A01D 34/14

(54) **SCHNEIDWERK**
CUTTING TOOL
BARRE DE COUPE

(30) Priorität: 19.08.2020 DE 102020121764
(43) Veröffentlichungstag der Anmeldung: 23.02.2022
(73) Patentinhaber: CLAAS Selbstfahrende Erntemaschinen GmbH, 33428 Harsewinkel (DE)
(72) Erfinder: Dudler, Heribert, 33428 Harsewinkel (DE); Köckemann, Josef, 33442 Herzebrock-Clarholz (DE); Tiemann, Robert, 32139 Spenge (DE); Eidhoff, Lukas, 33332 Gütersloh (DE)
(74) Vertreter: CLAAS Gruppe

(56) Entgegenhaltungen:
- EP-A1- 2 647 276
- EP-A1- 3 607 811
- DE-A1- 3 139 601
- US-A1- 2009 249 760
- US-B2- 7 805 921

## Beschreibung

Die vorliegende Erfindung betrifft ein Schneidwerk gemäß dem Oberbegriff des Anspruches 1.

Aus dem Stand der Technik ist es hinlänglich bekannt, Schneidwerke, die üblicher Weise von sogenannten Mähdreschern aufgenommen werden, mit Seitenschneidwerken auszustatten. Derartige Seitenschneidwerke haben die Funktion, den von dem jeweiligen Schneidwerk zu erntenden Getreidebestand so in vertikaler Richtung freizuschneiden, dass die Schneid- und Förderorgane des Schneidwerks den abzuerntenden Bestand problemlos schneiden, aufnehmen und abfördern können. Insbesondere werden derartige Seitenschneidwerke bei der Ernte von Raps eingesetzt, da erntereife Rapspflanzen untereinander extrem verschlungen sind. Üblicher Weise werden Seitenschneidwerke entweder beidseitig oder nur einseitig an dem jeweiligen Schneidwerk angeordnet.

Typischerweise sind Seitenschneidwerke so aufgebaut, dass gegeneinander oszillierende Trennmesser von einer Balkenstruktur, einer sogenannten Balkenschiene, aufgenommen werden, wobei jedes der oszillierenden Trennmesser mittels Koppelstangen in eine Oszillationsbewegung versetzt wird. So ist etwa aus EP 2 647 276 A1 eine Struktur bekannt, bei der die Koppelstangen nahezu mittig an dem jeweiligen Trennmesser angreifen, sodass die an den Trennmessern während des Betriebes auftretenden Reaktionskräfte über lange Wege in die kraftaufnehmenden Strukturen weitergeleitet werden müssen. Dies führt zu hohen, den Verschleiß fördernden Belastungen an den kraftübertragenden Elementen. Zudem steigern lange Kraftübertragungswege auch das Schwingverhalten der Seitenschneidwerke. Eine einzelne, als Schnellkupplung mit Zähnen, einer Keilverzahnung oder dergleichen, ausgeführte formschlüssige Kupplung verbindet eine Antriebsvorrichtung des Seitenschneidwerks mit einer Abtriebswelle eines Kegelradgetriebes, welches zugleich dem Antrieb des Messerbalkens des Schneidwerks dient. Eine am Seitenschneidwerk auftretende Überlastung kann sich auf das Getriebe auswirken.

Das Dokument EP 3 607 811 A1 offenbart ein Scheidwerk.

Das Dokument US 2009/249760 A1 offenbart einen Mähdrescher-Draper-Erntevorsatz mit flexiblem Mähbalken.

Das Dokument DE 31 39 601 A1 offenbart eine Vorrichtung zum Anbau eines Seitenschneidwerkes an einen Mähdrescher.

Das Dokument US 7 805 921 B2 offenbart eine Rollenhöhenregelung für ein e flexible Schneidplattform in einer landwirtschaftlichen Erntemaschine.

Es ist deshalb Aufgabe der Erfindung, die beschriebenen Nachteile des Standes der Technik zu vermeiden und insbesondere ein Seitenschneidwerk vorzuschlagen, welches gegenüber den bekannten Lösungen einen effizienten und sicheren Betrieb des Seitenschneidwerks und der zugehörigen angetriebenen Bauteile ermöglicht.

Die vorstehende Aufgabe wird bei einem Schneidwerk gemäß dem Oberbegriff von Anspruch 1 durch die Merkmale des kennzeichnenden Teils von Anspruch 1 gelöst. Vorteilhafte Weiterbildungen sind Gegenstand der Unteransprüche.

Gemäß dem Anspruch 1 wird ein Schneidwerk vorgeschlagen, mit einem Rahmen und einer daran angeordneten Schneidwerksmulde, einem der Schneidwerksmulde vorgeordneten Schneidtisch mit einem daran angeordneten oszillierend angetriebenen Messerbalken, einer rotativ angetriebenen Haspel, die mittels Tragarmen an der Schneidwerksmulde geführt und gegenüber dieser in oder entgegen einer Mährichtung verstellbar ist, sowie zumindest einem endseitig an dem Rahmen lösbar angeordneten Seitenschneidwerk, welches sich im Wesentlichen vertikal zu dem Messerbalken erstreckt, wobei das Seitenschneidwerk eine an einem Tragrahmen angeordnete Balkenschiene umfasst, wobei die Balkenschiene in Längsrichtung zumindest ein oszillierend angetriebenes Trennmesser mittels Messerhalteeinrichtungen abstützt und mit einem Ende mit einem die oszillierende Antriebsbewegung des zumindest einen Trennmessers bewirkenden, mit dem Messerbalken verbundenen Abtrieb durch eine Antriebsvorrichtung gekoppelt ist. Erfindungsgemäß ist vorgesehen, dass die Antriebsvorrichtung eine erste Kupplung zur Verbindung mit einer Abtriebswelle des Abtriebs und eine zweite, als Überlastkupplung ausgeführte, Kupplung aufweist, welche die erste Kupplung mit einer Antriebswelle zum Antreiben des zumindest einen Trennmessers verbindet. Die Überlastkupplung ist spielfrei ausgeführt, d.h. sie weist kein Verdrehspiel auf. Im Fall einer Überlastung, wie einer Blockade am Messerbalken, ist gewährleistet, dass die zweite, als Überlastkupplung ausgeführte Kupplung unmittelbar anspricht, um die angetriebenen Bauteile des Seitenschneidwerks als auch die Bauteile zum Antreiben des Messerbalkens des Schneidwerks vor Beschädigungen zu schützen.

Insbesondere können die erste Kupplung und die zweite Kupplung jeweils ein erstes Kupplungselement und ein zweites Kupplungselement umfassen, wobei das zweite Kupplungselement der ersten Kupplung und das erste Kupplungselement der zweiten Kupplung einstückig ausgeführt sein können. Es kann sich dabei um ein Bauteil handeln, welches das zweite Kupplungselement der ersten Kupplung und das erste Kupplungselement der zweiten Kupplung aufweist.

Weiterhin kann das erste Kupplungselement der ersten Kupplung einen sich axial erstreckenden Führungsabschnitt aufweisen, welcher sich zu seinem freien Ende hin verjüngt, und das zweite Kupplungselement der ersten Kupplung kann einen trichterförmigen Abschnitt aufweisen, in welchen der Führungsabschnitt einführbar ist. Hierdurch wird das Ankuppeln des Seitenschneidwerks vereinfacht.

Bevorzugt kann der trichterförmige Abschnitt über den Umfang verteilt angeordnete Ausnehmungen aufweisen, in welche über den Umfang verteilt angeordnete, sich radial nach außen erstreckende Vorsprünge am Führungsabschnitt in geschlossener Position der ersten Kupplung eingreifen. Hierbei können mindestens zwei Vorsprünge und eine Anzahl korrespondierender Ausnehmungen äquidistant zueinander angeordnet sein. Bevorzugt sind drei Vorsprünge und entsprechend drei korrespondierende Ausnehmungen vorgesehen, die jeweils unter einem Winkel von etwa 120° versetzt zueinander angeordnet sind. Somit kann die erste Kupplung nur in einer spezifischen Stellung geschlossen werden.

Insbesondere kann die zweite Kupplung eine Antriebswelle umfassen, auf welcher das zweite Kupplungselement der ersten Kupplung sowie das erste Kupplungselement und das zweite Kupplungselement der zweiten Kupplung fluchtend angeordnet sind. Dies ermöglicht eine gemeinsame Einhausung des ersten Kupplungselements und des zweiten Kupplungselements der zweiten Kupplung. Zumindest die zweite Kupplung kann somit für ein präzises Überlastverhalten geschmiert werden. Hierzu kann die gemeinsame Einhausung für die Zuführung von Schmiermitteln geeignete Zuführstellen aufweisen.

Des Weiteren kann das zweite Kupplungselement der zweiten Kupplung axial verschieblich auf der Antriebswelle angeordnet sein, wobei das zweite Kupplungselement mittels einer Federkraft mit einer Vorspannung beaufschlagt ist. Hierzu kann eine Druckfeder koaxial auf der Antriebswelle sein, die sich endseitig an einem ringförmigen Absatz auf der Antriebswelle sowie an einem das zweite Kupplungselement umgebenden Gehäuse abstützt. Mittels der Druckfeder kann die zweite Kupplung durch das Ankoppeln des Seitenschneidwerks an den Rahmen des Schneidwerks mit einer spezifischen Vorspannung beaufschlagt werden. Die Vorspannung kann dabei mit der Auslösekraft der zweiten Kupplung korrespondieren.

Bevorzugt kann an dem Rahmen oberhalb des Messerbalkens und unterhalb der Antriebsvorrichtung ein achsparallel zum Messerbalken verlaufender Bolzen angeordnet sein, um den der Tragrahmen schwenkbar ist. Der Bolzen bildet einen Anlenkpunkt aus, an dem der Tragrahmen lösbar an dem Rahmen des Schneidwerks eingehängt werden kann.

Weiterhin kann an dem Rahmen oberhalb der Antriebsvorrichtung zumindest ein Haltenocken angeordnet sein, welcher in eine korrespondierende Ausnehmung an einem am Rahmen anliegenden Rahmensegment des Tragrahmens eingreift. Der zumindest eine Haltenocken erstreckt sich im Wesentlichen senkrecht zur Oberfläche des Rahmens. Der zumindest einen Haltenocken dient dazu, das zu montierende Seitenschneidwerk bei der Montage zu führen bzw. um eine präzise Ausrichtung zu gewährleisten. Zudem sichert der zumindest eine Haltenocken das Seitenschneidwerk im Betrieb gegen eine seitliche Bewegung ab. Vorzugsweise können zwei zueinander parallele Haltenocken vorgesehen sein, die als ein U-förmiges Profilteil ausgeführt sind und an einem Anbaurahmen als Teil des Rahmens angeordnete sind.

Zur lösbaren Arretierung des Seitenschneidwerks kann oberhalb eines Übergangsbereiches des Rahmensegments zu einem im Wesentlichen vertikal verlaufenden Rahmenabschnitt des Tragrahmens ein Schnellspannverschluss an einem oberen Anlenkpunkt des Tragrahmens angeordnet sein, wobei der Schnellspannverschluss einen Hebelarm und einen daran angeordneten hakenförmigen Abschnitt aufweist, der mit einer Ausnehmung im Rahmen in Eingriff bringbar ist.

Insbesondere kann zur Übertragung einer Pendelbewegung auf den Messerbalken eine Hebelanordnung an dem Abtrieb angeordnet sein, wobei die Hebelanordnung einen drehfest an der Abtriebswelle angeordneten Schwenkhebel und eine an diesen angelenkte Koppelstange aufweist. In Abhängigkeit von der Ausführung des Schneidwerks kann an beiden äußeren Enden jeweils ein Abtrieb vorgesehen sein. Der Abtrieb überträgt eine Antriebsbewegung sowohl auf den Messerbalken als auch auf das oder die Seitenschneidwerke.

Bevorzugt kann die Koppelstange der Hebelanordnung mittels Gummilagern, die in endseitigen Lageraugen der Koppelstange angeordnet sind, gelagert sein. Der Vorteil von Gummilagern an diesen Stellen der Koppelstange besteht darin, dass sich Bauteiltoleranzen und Biegekräfte aufgrund von etwaigen geringfügigen Fluchtungsfehlern ausgleichen lassen.

Die vorliegende Erfindung wird nachstehend anhand eines in den Zeichnungen dargestellten Ausführungsbeispieles näher erläutert.

Es zeigen:
- Fig. 1: schematisch und exemplarisch eine Teilansicht eines Schneidwerks mit einem daran angeordneten Seitenschneidwerk;
- Fig. 2a, 2b: schematisch Teilansichten eines schneidwerkseitig angeordneten Abtriebs sowie einer seitenschneidwerkseitig angeordneten Antriebsvorrichtung;
- Fig. 3: schematisch eine Teilansicht des unteren Bereichs eines Tragrahmens des Seitenschneidwerks gemäß Fig. 1; und
- Fig. 4: eine perspektivische Ansicht eines Teils eines Rahmens des Schneidwerks gemäß Fig. 1 mit einem an einem Anbaurahmen des Rahmens angeordneten Adapter für einen Halmteiler.

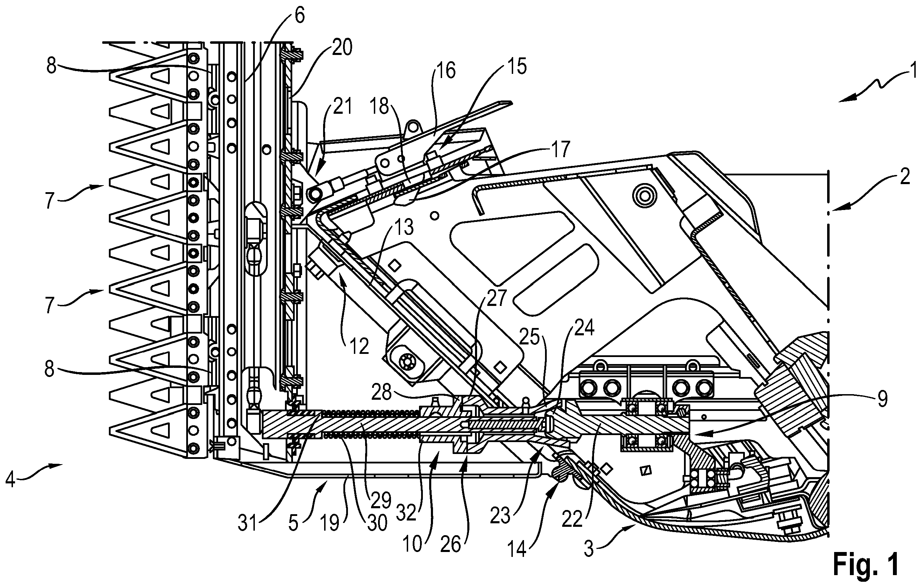

In Fig. 1 ist schematisch und exemplarisch eine Teilansicht eines Schneidwerks 1 mit zumindest einem daran angeordneten Seitenschneidwerk 4 dargestellt. Das Schneidwerk 1 wird von einem - nicht dargestellten - Mähdrescher aufgenommen und durch diesen mechanisch und/oder hydraulisch angetrieben. Hierzu wird das Schneidwerk 1 mit einem mechanischen Antriebsstrang des Mähdreschers gekoppelt. Zudem kann eine Anbindung des Schneidwerks 1 an ein Hydrauliksystem des Mähdreschers vorgesehen sein, um Komponenten des Schneidwerks 1, wie beispielsweise eine Haspel, hydraulisch anzutreiben. Das Schneidwerk 1 umfasst einen Rahmen 2 und eine daran angeordnete Schneidwerksmulde. Der Schneidwerksmulde ist dem Schneidtisch vorgeordnet. Die Haspel ist mittels Tragarmen an der Schneidwerksmulde geführt und gegenüber dieser in oder entgegen einer Mährichtung verstellbar. An dem Schneidtisch ist ein oszillierend angetriebener Messerbalken 3 angeordnet.

Das zumindest eine Seitenschneidwerk 4 ist endseitig an dem Rahmen 2 lösbar angeordnet. Das Seitenschneidwerk 4 erstreckt sich im Wesentlichen vertikal zu dem Messerbalken 3. Mittels des Seitenschneidwerks 4 wird stark in sich verschlungenes Erntegut, wie insbesondere Raps, aber auch Bohnen oder unter bestimmten Umständen auch Getreide, in einer vertikalen Ebene voneinander getrennt, bevor der Messerbalken 3 das Erntegut abtrennt. Dies dient dazu, Erntegutverluste zu vermeiden.

Das zumindest eine Seitenschneidwerk 4 umfasst eine an einem Tragrahmen 5 angeordnete Balkenschiene 6. Das Seitenschneidwerk 4 ist mittels des Tragrahmens 5 lösbar an einem äußeren Ende des Rahmens 2 des Schneidwerks 1 anbringbar. Die Balkenschiene 6 stützt in Längsrichtung zumindest ein oszillierend angetriebenes Trennmesser 7 mittels Messerhalteeinrichtungen 8 ab. Im dargestellten Ausführungsbeispiel sind zwei Trennmesser 7 parallel zueinander angeordnet. Die beiden Trennmesser 7 werden gegensinnig angetrieben. An zumindest einem äußeren Ende des Messerbalkens 3 ist ein Abtrieb 9 angeordnet, der die oszillierende Antriebsbewegung auf den Messerbalken 3 überträgt. Im Fall von beidseitig am äußeren Ende des Rahmen 2 des Schneidwerks 1 angeordneten Seitenschneidwerken 4 ist jeweils ein Abtrieb 9 vorgesehen.

Die Balkenschiene 6 ist an einem Ende mit dem die oszillierende Antriebsbewegung des zumindest einen Trennmessers 7 bewirkenden Abtrieb 9 des Messerbalkens 3 durch eine Antriebsvorrichtung 10 gekoppelt. Vorzugsweise ist die Antriebsvorrichtung 10 an einem dem Messerbalken 3 zugewandten unteren Ende der Balkenschiene 6 angeordnet. Hierdurch ist der Kraftübertragungsweg zwischen dem Abtrieb 9 und der Balkenschiene 6 kurzgehalten.

Der Tragrahmen 5 ist im Wesentlichen dreieckförmig ausgebildet. Der Tragrahmen 5 weist hier und vorzugsweise im Wesentlichen die Form eines rechtwinkligen Dreiecks auf. Der Tragrahmen 5 umfasst ein Rahmensegment 13, welches unter einem Winkel zum Trennmesser 7 geneigt angeordnet ist. Das Rahmensegment 13 erstreckt sich von einem unteren Anlenkpunkt 14 in Richtung eines oberen Anlenkpunktes 15 am Tragrahmen 5 des Seitenschneidwerks 1. Die Darstellung in Fig. 1 zeigt das Seitenschneidwerk 4 in seiner an dem Schneidwerk 1 arretierten Position. Hierzu ist ein Schnellspannverschluss 16 an dem Tragrahmen 5 angeordnet, welcher mit dem Rahmen 2 des Schneidwerks 1 lösbar verbunden ist. Der Schnellspannverschluss 16 weist einen Hebelarm 21 mit einem daran angeordneten hakenförmigen Abschnitt 17 auf. Der hakenförmige Abschnitt 17 ist mit einer korrespondierenden Ausnehmung 18 im Rahmen 2 in Eingriff bringbar ist. Der Schnellspannverschluss 16 kann als eine Art Kniehebelanordnung ausgeführt sein. Der zur Fixierung des Tragrahmens 5 in die Ausnehmung 18 eingreifende hakenförmigen Abschnitt 17 ermöglicht eine spielfreie und drehmomentsteife Verbindung des Tragrahmens 5 am Rahmen 2.

Der Tragrahmen 5 weist einen sich im Wesentlichen in horizontaler Richtung erstreckenden Rahmenabschnitt 19 auf. Oberhalb des Rahmenabschnitts 19 befinden sich die Komponenten der Antriebsvorrichtung 10. Im Wesentlichen senkrecht zu dem Rahmenabschnitt 19 erstreckt sich ein weiterer Rahmenabschnitt 20. Das Rahmensegment 13 ist endseitig mit dem horizontal verlaufenden Rahmenabschnitt 19 und dem vertikal verlaufenden Rahmenabschnitt 20 verbunden. Der Schnellspannverschluss 16 ist an dem sich im Wesentlichen in vertikaler Richtung erstreckenden Rahmenabschnitt 20 an dem oberen Anlenkpunkt 15 schwenkbar angelenkt. Der obere Anlenkpunkt 15 liegt oberhalb des Bereichs, in dem das Rahmensegment 13 endseitig mit dem vertikal verlaufenden Rahmenabschnitt 20 verbunden ist.

Das Seitenschneidwerk 4 nimmt zumindest ein erstes Lagerungselement 11 und ein zweites Lagerungselement 12 auf. Das zumindest eine erste Lagerungselement 11 ist dazu eingerichtet, an dem zumindest einen oszillierenden Trennmesser 7 auftretende Kräfte über die Länge der Balkenschiene 6 verteilt aus dieser in den Tragrahmen 5 abzuleiten. Das zumindest eine zweite Lagerungselement 12 ist dazu eingerichtet, die von dem Messerbalken 3 auf das Seitenschneidwerk 4 übertragenen Schwingungen zumindest zu dämpfen.

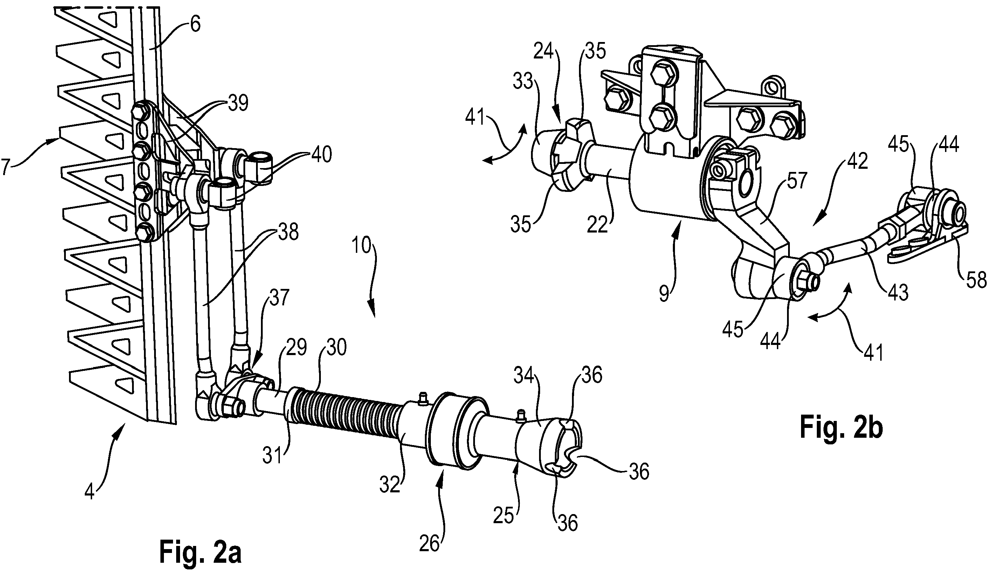

In den Fig. 2a und 2b sind schematisch Teilansichten des schneidwerkseitig angeordneten Abtriebs 9 bzw. der seitenschneidwerkseitig angeordneten Antriebsvorrichtung 10 dargestellt. Der schneidwerkseitig angeordnete Abtrieb 9 weist eine Abtriebswelle 22 auf, an der endseitig ein erstes Kupplungselement 24 einer ersten Kupplung 23 angeordnet ist. Die seitenschneidwerkseitig angeordnete Antriebsvorrichtung 10 weist ein korrespondierendes zweites Kupplungselement 25 der ersten Kupplung 23 auf, welches mit dem ersten Kupplungselement 24 bei der Montage des Seitenschneidwerks 4 an den Rahmen 2, insbesondere formschlüssig, in Eingriff bringbar ist. Die Antriebsvorrichtung 10 weist darüber hinaus eine zweite Kupplung 26 auf, die als spielfreie Überlastkupplung ausgeführt ist. Die zweite Kupplung 26 umfasst ein erstes Kupplungselement 27 und ein zweites Kupplungselement 28, die fluchtend auf einem gemeinsamen Schaft, hier und vorzugsweise einer Antriebswelle 29 der Antriebsvorrichtung 10, angeordnet sind. Auf der sich an das zweite Kupplungselement 28 anschließenden Antriebswelle 29 ist eine Druckfeder 30 koaxial angeordnet. Die Druckfeder 30 stützt sich endseitig an einem radialen Absatz 31 auf der Antriebswelle 29 sowie an einem Gehäuseabschnitt 32 der zweiten Kupplung 26 ab. Mittels der Druckfeder 30 wird die zweite Kupplung 26 beim Anbau des Seitenschneidwerks 4 vorgespannt.

Das erste Kupplungselement 24 der ersten Kupplung 23 weist einen sich axial erstreckenden Führungsabschnitt 33 auf, welcher sich zu seinem freien Ende hin verjüngt. Das zweite Kupplungselement 25 der ersten Kupplung 23 weist einen trichterförmigen Abschnitt 34 auf, in welchen der Führungsabschnitt 33 einführbar ist. An dem Führungsabschnitt 33 sind beabstandet zum freien Ende sich radial nach außen erstreckende Vorsprünge 35 angeordnet. Es sind mindestens zwei, vorzugsweise drei, Vorsprünge 35 vorgesehen, die in Umfangsrichtung verteilt im Wesentlichen äquidistant zueinander angeordnet sind. Das zweite Kupplungselement 25 der ersten Kupplung 23 weist in Anzahl und Form korrespondierende, in Umfangsrichtung unter einem Winkel versetzt angeordnete axiale Aussparungen 36 auf. Somit können das erste Kupplungselement 24 und das zweite Kupplungselement 25 der ersten Kupplung 23 nur in einer spezifischen Stellung von Abtriebswelle 22 und Antriebswelle 29 zueinander in Eingriff gebracht werden. Hierdurch lässt sich eine fehlerhafte Montage des Seitenschneidwerks 4 verhindern.

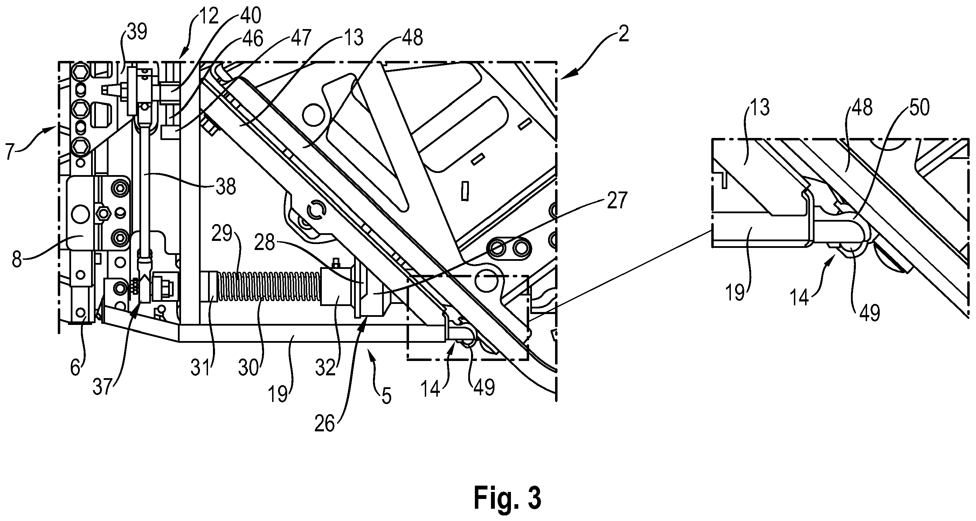

Das zweite Kupplungselement 25 der ersten Kupplung 23 und das erste Kupplungselement 27 der zweiten Kupplung 26 sind einstückig ausgeführt. Das zweite Kupplungselement 25 der ersten Kupplung 23 sowie das erste Kupplungselement 27 und das zweite Kupplungselement 28 der zweiten Kupplung 26 sind fluchtend auf der Antriebswelle 29 angeordnet. An dem freien Ende der Antriebswelle 29 der Antriebsvorrichtung 10 ist ein zweiseitiger Hebel 37 angeordnet. An den freien Enden des Hebels 37 sind zwei Koppelstangen 38 beabstandet zueinander und exzentrisch zur Längsachse der Abtriebswelle 22 an dem Hebel 37 angelenkt. Am gegenüberliegenden Ende der jeweilige Koppelstange 38 ist ein Übertragungselement 39 angeordnet, welches der Übertragung der oszillierenden Antriebsbewegung auf die Balkenschiene 6 dient. Das zumindest eine erste Lagerungselement 11 ist als eine parallel zur Balkenschiene 6 verlaufende Linearführung ausgeführt. Das jeweilige Übertragungselement 39 und die Koppelstange 38 werden von dem ersten Lagerungselement 11 in axialer Richtung geführt. Das erste Lagerungselement 11 weist eine - in Fig. 3 dargestellte - Führungsstange 46 auf, welche achsparallel zu der Balkenschiene 6 angeordnet ist. Entlang der Führungsstange 46 gleiten das Übertragungselement 39 und die Koppelstange 38 in axialer Richtung auf und ab. Hierzu ist ein Führungselement 40 vorgesehen, welches die Führungsstange 46 formschlüssig umschließt. An dem Führungselement 40 ist die Koppelstange 38 an einer zu der Führungsstange 46 senkrecht verlaufenden Achse angelenkt. Die Führungsstange 46 ist an ihren gegenüberliegenden Enden an dem Tragrahmen 5 fixiert. Hierzu umfasst das jeweilige erste Lagerungselement 11 zwei Befestigungspunkte 47, zwischen denen die Führungsstange 46 angeordnet ist. Die Befestigungspunkte 47 sind in einem Abstand zueinander an dem Tragrahmen 5 angeordnet, wobei der Abstand der Befestigungspunkte 47 zueinander größer als die Amplitude der oszillierenden Bewegung des Trennmessers 7 ist. Das jeweilige erste Lagerungselement 11 beschränkt die Anzahl der Freiheitsgrade der damit verbunden Koppelstange 38 und damit des Übertragungselements 39 und der daran angeordneten Balkenschiene 6 auf zwei Translationsfreiheitsgrade.

Die Abtriebswelle 22 überträgt eine von dem Abtrieb 9 erzeugte Pendelbewegung 41 mittels der ersten Kupplung 23 auf die Trennmesser 7. Hierzu wird durch eine Hebelanordnung 42 die Pendelbewegung 41 von dem oszillierend angetrieben Messerbalken 3 auf die Abtriebswelle 22 übertragen. Die Hebelanordnung 42 weist einen drehfest an der Abtriebswelle 22 des Abtriebs 9 angeordneten Schwenkhebel 57 und eine an diesen angelenkte Koppelstange 43 auf. Die Koppelstange 43 der Hebelanordnung 42 ist mittels Gummilagern 44, die in endseitigen Lageraugen 45 der Koppelstange 43 angeordnet sind, gelagert. Das Lagerauge 45 ist mittels des Gummilagers 44 an einem Übertragungsbauteil 58 angelenkt. Das Übertragungsbauteil 58 ist ortsfest am oszillierend angetrieben Messerbalken 3 angeordnet, um die reziproke Bewegung aufzunehmen und durch die Hebelanordnung 42 auf die Abtriebswelle 22 zu übertragen.

Die Darstellung in Fig. 3 zeigt schematisch eine Teilansicht des unteren Bereichs des Tragrahmens 5 des Seitenschneidwerks 4 gemäß Fig. 1. Der Rahmen 2 des Schneidwerks 1 weist jeweils einen an den äußeren Enden des Schneidwerks 1 befindlichen Anbaurahmen 48 auf, der unter einem Winkel zum Messerbalken 3 geneigt ist. Der Anbaurahmen 48 erstreckt sich ausgehend von der Ebene des Messerbalkens 3 abschnittsweise in vertikaler Richtung. Der Anbaurahmen 48 weist eine zum Messerbalken 3 parallele Anlagefläche auf. An dem Anbaurahmen 48 ist oberhalb des Messerbalkens 3 und unterhalb der Antriebsvorrichtung 10 ein achsparallel zum Messerbalken 3 verlaufender Bolzen 49 als unterer Anlenkpunkt 14 angeordnet, um den der Tragrahmen 5 des Seitenschneidwerks 4 schwenkbar ist. Hierzu ist zumindest an dem Rahmensegment 13 an seinem dem sich in horizontaler Richtung erstreckenden Rahmenabschnitt 19 zugewandten Ende eine halbschalenförmige Aufnahme 50 angeordnet. Die halbschalenförmige Aufnahme 50 ist nach unten, d.h. zum Messerbalken 3 hin, offen ausgeführt und lässt sich auf den Bolzen 49 aufsetzen und umschließt den Bolzen 49 abschnittsweise formschlüssig.

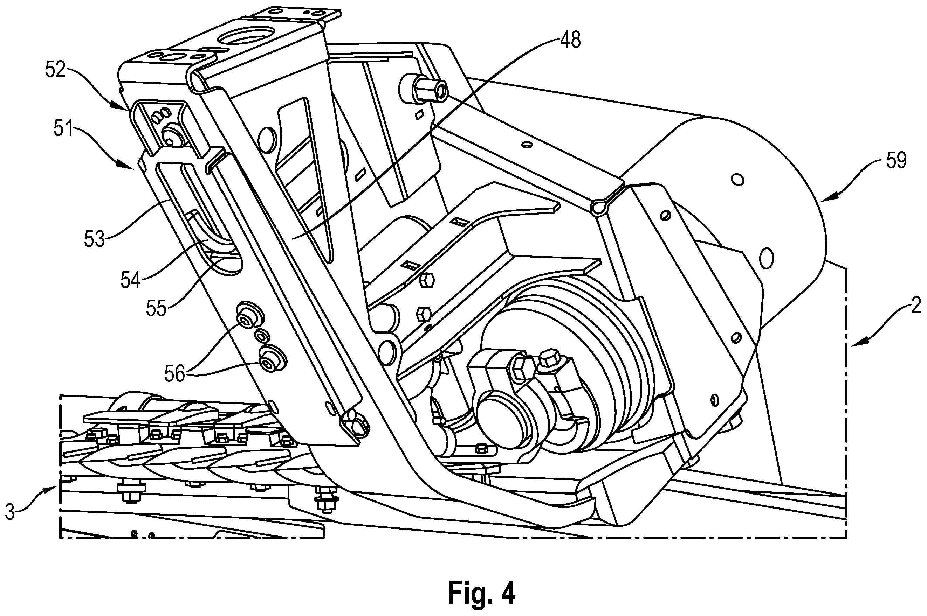

In Fig. 4 ist eine perspektivische Ansicht eines Teils des Rahmens 2 des Schneidwerks 1 gemäß Fig. 1 mit einem an dem Anbaurahmen 48 des Rahmens 2 angeordneten plattenförmigen Adapter 51 zur Anordnung eines - nicht dargestellten - Halmteilers dargestellt. Der Adapter 51 ermöglicht eine höhenverstellbare Anbringung des auswechselbaren Halmteilers. Dabei wird der - nicht dargestellte - Halmteiler anstelle des Seitenschneidwerks 4 an dem Anbaurahmen 48 des Rahmens 2 lösbar befestigt. Hierzu weist der Adapter 51 zumindest einen nach unten offenen, halbschalenförmigen Abschnitt auf, welcher mit dem im bodennahen Bereich an dem Anbaurahmen 48 des Rahmens 2 angeordneten Bolzen 49 in Eingriff bringbar ist. Der Adapter 51 kann an einem dem halbschalenförmigen Abschnitt gegenüberliegenden Ende ein Befestigungsmittel aufweisen, durch welches der Adapter 51 kraft- und/oder formschlüssig mit dem Anbaurahmen 48 verbindbar ist. Die Anordnung des Adapters 51 erfolgt somit unter Verwendung zumindest eines Teils der an dem Anbaurahmen 48 des Rahmens 2 angeordneten Mittel, d.h. dem Bolzen 49, der auch zur lösbaren Verbindung des Seitenschneidwerks 4 mit dem Anbaurahmen 48 verwendet wird. Zur Begrenzung der vertikalen Auslenkung und zur Führung des Halmteilers ist ein Langloch 53 in dem plattenförmigen Adapter 51 vorgesehen, durch welches sich ein - nicht dargestellter - Tragarm des Halmteilers erstreckt. Der sich durch das Langloch 53 erstreckende Tragarm ist mit einem freien Ende an einer Schwenkachse im Inneren des Anbaurahmen 48 des Rahmens 2 lösbar angelenkt. Der Tragarm des Halmteilers ist von einer Aufnahme 54 gehalten, welche in Längsrichtung des Adapters 51 verschieblich ist. Die Aufnahme 54 ist im unteren, dem Messerbalken 3 zugewandten Bereich des Langlochs 53 innenseitig an dem Adapter 51 angeordnet. Die Aufnahme 54 ist nach oben hin offen ausgeführt. Der im Inneren des Anbaurahmen 48 angelenkte Tragarm des Halmteilers kann somit in der Aufnahme 54 abgelegt werden und wird aufgrund der Schwerkraft in der Aufnahme 54 gehalten. Unterhalb der Aufnahme 54 ist ein plattenförmiger Abschnitt 55 angeordnet, der gemeinsam mit der Aufnahme 54 relativ zu dem Adapter 51 in Längsrichtung, d.h. vertikaler Richtung, verschiebbar ist. Mittels einer Arretiervorrichtung auf der Innenseite des Adapters 51, die durch Schraubverbindungen 56 lösbar fixiert ist, ist der plattenförmige Abschnitt 55 in verschiedenen Höhenpositionen festlegbar. Durch das Verschieben und anschließende Arretieren des plattenförmigen Abschnitts 55 lässt sich die Höhe des Halmteilers einstellen.

Oberhalb des Adapters 51 ist zumindest ein Haltenocken 52 am Rahmen 2 bzw. dem Anbaurahmen 48 angeordnet. Der zumindest eine Haltenocken 52 greift in eine korrespondierende Ausnehmung an dem am Anbaurahmen 48 anliegenden Rahmensegment 13 des Tragrahmens 5 ein. Der zumindest eine Haltenocken 52 dient der Führung und Ausrichtung des Seitenschneidwerks 4 bei dessen Montage an den Rahmen 2 des Schneidwerks 1. Mit 59 ist ein Teil eines Antriebstranges bezeichnet, durch welchen der Messerbalken 3 trieblich mit dem mechanischen Antriebsstrang des Mähdreschers verbunden wird.

**Bezugszeichenliste**

| | | | |
|---|---|---|---|
| 1 | Schneidwerk | 34 | Abschnitt |
| 2 | Rahmen | 35 | Vorsprung |
| 3 | Messerbalken | 36 | Aussparung |
| 4 | Seitenschneidwerk | 37 | Zweiseitiger Hebel |
| 5 | Tragrahmen | 38 | Koppelstange |
| 6 | Balkenschiene | 39 | Übertragungselement |
| 7 | Trennmesser | 40 | Führungselement |
| 8 | Messerhalteeinrichtung | 41 | Pendelbewegung |
| 9 | Abtrieb | 42 | Hebelanordnung |
| 10 | Antriebsvorrichtung | 43 | Koppelstange |
| 11 | Erstes Lagerungselement | 44 | Gummilager |
| 12 | Zweites Lagerungselement | 45 | Lagerauge |
| 13 | Rahmensegment | 46 | Führungsstange |
| 14 | Unterer Anlenkpunkt | 47 | Befestigungspunkt |
| 15 | Oberer Anlenkpunkt | 48 | Anbaurahmen |
| 16 | Schnellspannverschluss | 49 | Bolzen |
| 17 | Hakenförmiger Abschnitt | 50 | Aufnahme |
| 18 | Ausnehmung | 51 | Adapter |
| 19 | Rahmenabschnitt | 52 | Haltenocken |
| 20 | Rahmenabschnitt | 53 | Langloch |
| 21 | Hebelarm | 54 | Aufnahme |
| 22 | Antriebswelle | 55 | Abschnitt |
| 23 | Erste Kupplung | 56 | Schraubverbindung |
| 24 | Erstes Kupplungselement | 57 | Schwenkhebel |
| 25 | Zweites Kupplungselement | 58 | Übertragungsbauteil |
| 26 | Erste Kupplung | 59 | Antriebsstrang |
| 27 | Erstes Kupplungselement | | |
| 27 | Zweites Kupplungselement | | |
| 29 | Antriebswelle | | |
| 30 | Druckfeder | | |
| 31 | Absatz | | |
| 32 | Gehäuseabschnitt | | |
| 33 | Führungsabschnitt | | |

## Patentansprüche

1. Schneidwerk (1), mit einem Rahmen (2) und einer daran angeordneten Schneidwerksmulde, einem der Schneidwerksmulde vorgeordneten Schneidtisch mit einem daran angeordneten, durch zumindest einen Abtrieb (9) oszillierend angetriebenen Messerbalken (3), einer rotativ angetriebenen Haspel, die mittels Tragarmen an der Schneidwerksmulde geführt und gegenüber dieser in oder entgegen einer Mährichtung verstellbar ist, sowie zumindest einem endseitig an dem Rahmen (2) lösbar angeordneten Seitenschneidwerk (4), welches sich im Wesentlichen vertikal zu dem Messerbalken (3) erstreckt, wobei das Seitenschneidwerk (4) eine an einem Tragrahmen (5) angeordnete Balkenschiene (6) umfasst, wobei die Balkenschiene (6) in Längsrichtung zumindest ein oszillierend angetriebenes Trennmesser (7) mittels Messerhalteeinrichtungen (8) abstützt und mit einem Ende mit einem die oszillierende Antriebsbewegung des zumindest einen Trennmessers (7) bewirkenden, mit dem Messerbalken (3) verbundenen Abtrieb (9) durch eine Antriebsvorrichtung (10) gekoppelt ist,
**dadurch gekennzeichnet,**
**dass** die Antriebsvorrichtung (10) eine erste Kupplung (23) zur Verbindung mit einer Abtriebswelle (22) des Abtriebs (9) und eine zweite, als Überlastkupplung ausgeführte, Kupplung (26) aufweist, welche die erste Kupplung (23) mit einer Antriebswelle (29) zum Antreiben des zumindest einen Trennmessers (7) verbindet.

2. Schneidwerk (1) nach Anspruch 1, **dadurch gekennzeichnet, dass** die erste Kupplung (23) und die zweite Kupplung (26) jeweils ein erstes Kupplungselement (24) und ein zweites Kupplungselement (25) umfassen, wobei das zweite Kupplungselement (25) der ersten Kupplung (23) und das erste Kupplungselement (27) der zweiten Kupplung (26) einstückig ausgeführt ist.

3. Schneidwerk (1) nach Anspruch 1 oder 2, **dadurch gekennzeichnet, dass** das erste Kupplungselement (24) der ersten Kupplung (23) einen sich axial erstreckenden Führungsabschnitt (33) aufweist, welcher sich zu seinem freien Ende hin verjüngt, und dass das zweite Kupplungselement (25) der ersten Kupplung (23) einen trichterförmigen Abschnitt (34) aufweist, in welchen der Führungsabschnitt (33) einführbar ist.

4. Schneidwerk (1) nach Anspruch 3, **dadurch gekennzeichnet, dass** der trichterförmige Abschnitt (34) über den Umfang verteilt angeordnete Ausnehmungen (36) aufweist, in welche über den Umfang verteilt angeordnete, sich radial nach außen erstreckende Vorsprünge (35) am Führungsabschnitt (33) in geschlossener Position der ersten Kupplung (23) eingreifen.

5. Schneidwerk (1) nach einem der Ansprüche 1 bis 4, **dadurch gekennzeichnet, dass** die zweite Kupplung (26) eine Antriebswelle (29) umfasst, auf welcher das zweite Kupplungselement (24) der ersten Kupplung (23) sowie das erste Kupplungselement (27) und das zweite Kupplungselement (28) der zweiten Kupplung (26) fluchtend angeordnet sind.

6. Schneidwerk (1) nach Anspruch 5, **dadurch gekennzeichnet, dass** das zweite Kupplungselement (28) der zweiten Kupplung (26) axial verschieblich auf der Antriebswelle (23) angeordnet ist, wobei das zweite Kupplungselement (28) mittels einer Federkraft mit einer Vorspannung beaufschlagt ist.

7. Schneidwerk (1) nach einem der vorangehenden Ansprüche, **dadurch gekennzeichnet, dass** an dem Rahmen (2) oberhalb des Messerbalkens (3) und unterhalb der Antriebsvorrichtung (10) ein achsparallel zum Messerbalken (3) verlaufender Bolzen (49) angeordnet ist, um den der Tragrahmen (5) schwenkbar ist.

8. Schneidwerk (1) nach einem der vorangehenden Ansprüche, **dadurch gekennzeichnet, dass** an dem Rahmen (2) oberhalb der Antriebsvorrichtung (10) zumindest ein Haltenocken (52) angeordnet ist, welcher in eine korrespondierende Ausnehmung an einem am Rahmen (2) anliegenden Rahmensegment (13) des Tragrahmens (5) eingreift.

9. Schneidwerk (1) nach Anspruch 8, **dadurch gekennzeichnet, dass** oberhalb eines Übergangsbereiches des Rahmensegments (13) zu einem im Wesentlichen vertikal verlaufenden Rahmenabschnitt (20) des Tragrahmens (5) ein Schnellspannverschluss (16) an einem oberen Anlenkpunkt (15) des Tragrahmens (5) angeordnet ist, wobei der Schnellspannverschluss (16) einen Hebelarm (21) und einen daran angeordneten hakenförmigen Abschnitt (17) aufweist, der mit einer Ausnehmung (18) im Rahmen (2) in Eingriff bringbar ist.

10. Schneidwerk (1) nach einem der vorangehenden Ansprüche, **dadurch gekennzeichnet, dass** zur Übertragung einer Pendelbewegung (41) auf den Messerbalken (3) eine Hebelanordnung (42) an dem Abtrieb (9) angeordnet ist, wobei die Hebelanordnung (42) einen drehfest an der Abtriebswelle (22) angeordneten Schwenkhebel (57) und eine an diesen angelenkte Koppelstange (43) aufweist.

11. Schneidwerk (1) nach Anspruch 10, **dadurch gekennzeichnet, dass** die Koppelstange (43) der Hebelanordnung (42) mittels Gummilagern (44), die in endseitigen Lageraugen (45) der Koppelstange (43) angeordnet sind, gelagert ist.

## Claims

1. Cutterbar (1), having a frame (2) and a cutterbar trough arranged thereon, a cutterbar table arranged upstream of the cutterbar trough and having a knife-bar (3) which is arranged on said cutterbar table and is driven in an oscillating manner by at least one output (9), a rotationally driven reel which is guided by means of support arms on the cutterbar trough and is adjustable relative to the latter in or counter to a mowing direction, and at least one side cutterbar (4) which is detachably arranged on the end side of the frame (2) and extends substantially vertically with respect to the knife-bar (3), wherein the side cutterbar (4) comprises a bar rail (6) arranged on a support frame (5), wherein the bar rail (6) supports at least one oscillatingly driven separating knife (7) in the longitudinal direction by means of knife-holding devices (8) and is coupled by a drive device (10) at one end to an output (9), which brings about the oscillating driving movement of the at least one separating knife (7) and is connected to the knife-bar (3),
**characterized**
**in that** the drive device (10) has a first clutch (23) for connection to an output shaft (22) of the output (9) and a second clutch (26), which is designed as an overload clutch and which connects the first clutch (23) to a drive shaft (29) for driving the at least one separating knife (7).

2. Cutterbar (1) according to Claim 1, **characterized in that** the first clutch (23) and the second clutch (26) each comprise a first clutch element (24) and a second clutch element (25), wherein the second clutch element (25) of the first clutch (23) and the first clutch element (27) of the second clutch (26) are formed integrally.

3. Cutterbar (1) according to Claim 1 or 2, **characterized in that** the first clutch element (24) of the first clutch (23) has an axially extending guide portion (33) which tapers towards its free end, and **in that** the second clutch element (25) of the first clutch (23) has a funnel-shaped portion (34) into which the guide portion (33) can be introduced.

4. Cutterbar (1) according to Claim 3, **characterized in that** the funnel-shaped portion (34) has recesses (36) which are distributed over the circumference and in which radially outwardly extending projections (35) distributed over the circumference of the guide portion (33) engage in the closed position of the first clutch (23).

5. Cutterbar (1) according to one of Claims 1 to 4, **characterized in that** the second clutch (26) comprises a drive shaft (29) on which the second clutch element (24) of the first clutch (23) and the first clutch element (27) and the second clutch element (28) of the second clutch (26) are arranged in alignment.

6. Cutterbar (1) according to Claim 5, **characterized in that** the second clutch element (28) of the second clutch (26) is arranged axially displaceably on the drive shaft (23), the second clutch element (28) being subjected to a preload by means of a spring force.

7. Cutterbar (1) according to one of the preceding claims, **characterized in that** a bolt (49), which extends axially parallel to the knife-bar (3) and about which the support frame (5) is pivotable, is arranged on the frame (2) above the knife-bar (3) and below the drive device (10).

8. Cutterbar (1) according to one of the preceding claims, **characterized in that** at least one holding cam (52) is arranged on the frame (2) above the drive device (10), which holding cam engages in a corresponding recess on a frame segment (13) of the support frame (5) that bears against the frame (2).

9. Cutterbar (1) according to Claim 8, **characterized in that** a quick-action clamping closure (16) is arranged at an upper articulation point (15) of the support frame (5) above a transition region of the frame segment (13) to a substantially vertically running frame section (20) of the support frame (5), wherein the quick-action clamping closure (16) has a lever arm (21) and a hook-shaped portion (17) which is arranged thereon and can be brought into engagement with a recess (18) in the frame (2).

10. Cutterbar (1) according to one of the preceding claims, **characterized in that**, for transmitting a pendulum movement (41) to the knife-bar (3), a lever arrangement (42) is arranged on the output (9), wherein the lever arrangement (42) has a pivot lever (57) arranged on the output shaft (22) for conjoint rotation and a coupling rod (43) articulated on said pivot lever.

11. Cutterbar (1) according to Claim 10, **characterized in that** the coupling rod (43) of the lever arrangement (42) is mounted by means of rubber bearings (44) which are arranged in end-side bearing eyes (45) of the coupling rod (43).

## Revendications

1. Mécanisme de coupe (1), avec un châssis (2) et une cuve de mécanisme de coupe disposée sur celui-ci, une table de coupe disposée en amont de la cuve de mécanisme de coupe avec une barre porte-lames (3) disposée sur celle-ci et entraînée de manière oscillante par au moins une sortie (9), un tambour entraîné en rotation, qui est guidé au moyen de bras de support sur la cuve de mécanisme de coupe et peut être ajusté par rapport à celle-ci dans la direction de fauchage ou dans le sens opposé à celle-ci, ainsi qu'au moins un mécanisme de coupe latérale (4) disposé de manière amovible côté extrémité sur le châssis (2), qui s'étend sensiblement verticalement par rapport à la barre porte-lames (3), le mécanisme de coupe latérale (4) comprenant un rail porte-barres (6) disposé sur un châssis de support (5), le rail porte-barres (6) supportant au moins une lame de séparation (7) entraînée de manière oscillante dans le sens longitudinal au moyen de dispositifs de maintien de lame (8) et étant couplé par une extrémité à une sortie (9) provoquant le mouvement d'entraînement oscillant de l'au moins une lame de séparation (7), reliée à la barre porte-lames (3) par un dispositif d'entraînement (10),
**caractérisé en ce**
**que** le dispositif d'entraînement (10) comporte un premier accouplement (23) destiné à être relié à un arbre de sortie (22) de la sortie (9) et un deuxième accouplement (26) réalisé comme un accouplement de surcharge, qui relie le premier accouplement (23) à un arbre d'entraînement (29) destiné à entraîner l'au moins une lame de séparation (7).

2. Mécanisme de coupe (1) selon la revendication 1, **caractérisé en ce que** le premier accouplement (23) et le deuxième accouplement (26) comprennent chacun un premier élément d'accouplement (24) et un deuxième élément d'accouplement (25), le deuxième élément d'accouplement (25) du premier accouplement (23) et le premier élément d'accouplement (27) du deuxième accouplement (26) étant formés d'une seule pièce.

3. Mécanisme de coupe (1) selon la revendication 1 ou 2, **caractérisé en ce que** le premier élément d'accouplement (24) du premier accouplement (23) comporte une section de guidage (33) s'étendant axialement qui se rétrécit vers son extrémité libre, et que le deuxième élément d'accouplement (25) du premier accouplement (23) comporte une section en forme d'entonnoir (34) dans laquelle la section de guidage (33) peut être introduite.

4. Mécanisme de coupe (1) selon la revendication 3, **caractérisé en ce que** la section en forme d'entonnoir (34) comporte des évidements (36) répartis sur la périphérie, dans lesquels viennent en prise, dans la position fermée du premier accouplement (23), des parties faisant saillie (35) réparties sur la périphérie, s'étendant radialement vers l'extérieur sur la section de guidage (33).

5. Mécanisme de coupe (1) selon l'une des revendications 1 à 4, **caractérisé en ce que** le deuxième accouplement (26) comprend un arbre d'entraînement (29), sur lequel le deuxième élément d'accouplement (24) du premier accouplement (26) et le premier élément d'accouplement (27) et le deuxième élément d'accouplement (28) du deuxième accouplement (23) sont disposés de manière alignée.

6. Mécanisme de coupe (1) selon la revendication 5, **caractérisé en ce que** le deuxième élément d'accouplement (28) du deuxième accouplement (26) est disposé de manière à pouvoir coulisser axialement sur l'arbre d'entraînement (23), le deuxième élément d'accouplement (28) étant soumis à l'action d'une précontrainte au moyen d'une force de ressort.

7. Mécanisme de coupe (1) selon l'une des revendications précédentes, **caractérisé en ce qu'**un boulon (49) s'étendant parallèlement à l'axe de la barre porte-lames (3), autour duquel le châssis de support (5) peut pivoter, est disposé sur le châssis (2) au-dessus de la barre porte-lames (3) et au-dessous du dispositif d'entraînement (10).

8. Mécanisme de coupe (1) selon l'une des revendications précédentes, **caractérisé en ce qu'**au moins une came de maintien (52), qui vient en prise avec un évidement correspondant sur un segment de châssis (13), reposant sur le châssis (2), du châssis de support (5), est disposée sur le châssis (2) au-dessus du dispositif d'entraînement (10).

9. Mécanisme de coupe (1) selon la revendication 8, **caractérisé en ce qu'**une fermeture à serrage rapide (16) est disposée sur un point d'articulation supérieur (15) du châssis de support (5) au-dessus d'une zone de transition du segment de châssis (13) vers une section de châssis (20) s'étendant sensiblement verticalement du châssis de support (5), la fermeture à serrage rapide (16) comportant un bras de levier (21) et une section en forme de crochet (17) disposée sur celui-ci, qui peut être amenée en prise avec un évidement (18) dans le châssis (2).

10. Mécanisme de coupe (1) selon l'une des revendications précédentes, **caractérisé en ce que** pour transmettre un mouvement pendulaire (41) sur la barre porte-lames (3), un ensemble de leviers (42) est disposé sur la sortie (9), l'ensemble de leviers (42) comportant un levier pivotant (57) disposé de manière solidaire en rotation sur l'arbre de sortie (22) et une tige de couplage (43) articulée sur celui-ci.

11. Mécanisme de coupe (1) selon la revendication 10, **caractérisé en ce que** la tige de couplage (43) de l'ensemble de leviers (42) est montée au moyen de paliers en caoutchouc (44) qui sont disposés dans des œillets de palier (45) côté extrémité de la tige de couplage (43).
